# DEMANDE DE BREVET EUROPEEN

(11) **EP 2 879 275 A1**
(43) Date de publication de la demande: **03.06.2015**
(21) Numéro de dépôt: 14189608.4
(22) Date de dépôt: 21.10.2014
(51) Int. Cl.: H02K 1/27, H02K 15/03, H02K 15/16

(54) **Procédé d'assemblage par rivetage d'un rotor de machine électrique tournante, rotor et compresseur correspondants**

(30) Priorité: 21.10.2013 FR 1360218
(71) Demandeur: VALEO EQUIPEMENTS ELECTRIQUES MOTEUR, 94046 Créteil Cedex (FR)
(72) Inventeur: Walme, Benoit, 78810 FEUCHEROLLES (FR); Kim, Nam-Gook, 94410 SAINT-MAURICE (FR)
(74) Mandataire: Ribeil, Alexandre

(57) **Abrégé**

L'invention porte principalement sur un procédé d'assemblage d'un rotor (10) de machine électrique tournante, caractérisé ce qu'il comporte les étapes suivantes:
- plaquer un flasque (29, 30) contre chaque face d'extrémité d'un corps (11) dudit rotor prenant la forme d'un paquet de tôles,
- insérer au moins un rivet (33) en inox à l'intérieur d'une ouverture traversante ménagée dans ledit corps (11) du rotor (10) et dans lesdits flasques (29, 30), en sorte qu'au moins une extrémité dudit rivet (33) dépasse par rapport à un des flasques (29, 30), et
- écraser par bouterollage ladite extrémité dépassante (35) dudit rivet (33) pour formation d'un épanouissement (46).

L'invention a également pour objet le rotor (10) correspondant.

## Description

### DOMAINE TECHNIQUE DE L'INVENTION

La présente invention porte sur un procédé d'assemblage par rivetage d'un rotor de machine électrique tournante ainsi que sur le rotor correspondant. L'invention trouve une application particulièrement avantageuse, mais non exclusive, avec les compresseurs utilisés pour la compression de fluide réfrigérant de climatiseur de véhicule automobile.

### ARRIERE PLAN TECHNOLOGIQUE

On connaît des machines électriques comportant un stator et un rotor solidaire d'un arbre assurant la mise en mouvement d'un compresseur à spirale, celle-ci étant désignée sous le nom de "scroll". Un tel système comporte deux spirales coopérant entre elles pour pomper et comprimer le fluide réfrigérant. En général, une des spires est fixe, alors que l'autre se déplace excentriquement sans tourner, de sorte à pomper puis emprisonner et enfin comprimer des poches de fluide entre les spires. Un tel système est par exemple décrit dans le document EP1865200.

Le rotor comporte un corps réalisé en tôles feuilletées ayant une âme centrale et des bras s'étendant radialement par rapport à l'âme. Ces bras comportent chacun deux rebords implantés à la périphérie externe du rotor. Des aimants permanents sont positionnés à l'intérieur de logements délimités chacun par deux faces en regard l'une de l'autre de deux bras adjacents, une face externe de l'âme du rotor, et les rebords des bras. Le corps du rotor est formé par un empilage de feuilles de tôles maintenues sous forme de paquet au moyen de rivets traversant axialement le rotor de part en part, ou tout autre système de fixation adapté.

En outre, deux flasques sont plaqués de part et d'autre du rotor. Ces flasques pourront assurer un montage globalement étanche du rotor en association avec des lames positionnées entre les faces internes des rebords des bras et la face externe des aimants. Chaque flasque pourra également comporter un poids d'équilibrage. Afin d'assurer l'assemblage du rotor, on insère des rivets traversants de part en part de l'ensemble formé par le rotor, les flasques, et le cas échéant les poids d'équilibrage. Ces rivets réalisés généralement en laiton ou en acier standard présentent des extrémités munies d'arêtes franches qui sont écrasées par tamponnage ou "stamping" selon un terme anglo-saxon bien connu de l'homme du métier en appliquant un effort essentiellement axial. L'écrasement de l'extrémité des rivets permet de former des épanouissements radiaux assurant le maintien de l'ensemble.

Le problème de cette opération est qu'elle génère des fissures au niveau des extrémités écrasées des rivets, ce qui peut engendrer une pollution prenant la forme de particules de matière venant se coller sur le rotor magnétisé. Ces particules deviennent alors susceptibles de s'introduire dans le fluide situé dans l'environnement de la machine électrique, ce qui risque de détériorer le fonctionnement du compresseur.

Ce phénomène étant amplifié lorsque la longueur dépassante des rivets est importante, il est nécessaire de limiter l'intervalle de tolérance de l'ensemble. Cela est toutefois difficile compte tenu du grand nombre de feuilles qui composent le rotor dont l'intervalle de tolérance s'ajoute à celui de chacun des autres éléments constituant le rotor, à savoir les deux flasques et le cas échéant les deux contrepoids.

Il existe donc le besoin de réaliser un rivetage efficace garantissant une bonne tenue mécanique du rotor sans engendrer de pollution de matière et cela quelle que soit la configuration de l'assemblage.

### OBJET DE L'INVENTION

L'invention vise à répondre efficacement à ce besoin en proposant un procédé d'assemblage d'un rotor de machine électrique tournante, caractérisé ce qu'il comporte les étapes suivantes:
- plaquer un flasque contre chaque face d'extrémité d'un corps dudit rotor prenant la forme d'un paquet de tôles,
- insérer au moins un rivet en inox à l'intérieur d'une ouverture traversante ménagée dans ledit corps du rotor et dans lesdits flasques, en sorte qu'au moins une extrémité dudit rivet dépasse par rapport à un des flasques, et
- écraser par bouterollage ladite extrémité dépassante dudit rivet pour formation d'un épanouissement.

L'invention permet ainsi d'assurer une déformation de la matière de l'extrémité du rivet sans générer de particules de matière polluantes susceptibles de s'introduire à l'intérieur du fluide du compresseur. En outre, la longueur du rivet écrasée lors de la mise en oeuvre du procédé pouvant être importante, il est possible d'augmenter les intervalles de tolérance de l'assemblage. L'invention facilite ainsi également la réalisation du rotor.

Selon une mise en oeuvre, l'extrémité dépassante du rivet est chanfreinée.

Selon une mise en oeuvre, ladite extrémité chanfreinée présente un angle de chanfrein compris entre 40 et 50 degrés par rapport à un axe dudit rivet.

Selon une mise en oeuvre, ladite extrémité chanfreinée s'étend sur une distance comprise entre 2 et 5 pourcents d'une longueur totale dudit rivet.

Selon une mise en oeuvre, chaque flasque comporte au moins un poids d'équilibrage.

Selon une mise en oeuvre, ledit rivet est inséré en sorte qu'une tête dudit rivet est logée à l'intérieur d'une creusure ménagée dans un des poids d'équilibrage.

Selon une mise en oeuvre, ledit procédé comporte l'étape d'assembler les flasques et leur poids d'équilibrage correspondant avec ledit corps du rotor au moyen de deux groupes de rivets, un premier groupe de rivets ayant des têtes logées dans des creusures d'un des poids d'équilibrage tandis qu'un deuxième groupe de rivets a des têtes logées dans des creusures de l'autre poids d'équilibrage.

Selon une mise en oeuvre, une bouterolle assure, dans un premier temps, le bouterollage des extrémités dépassantes des rivets opposées aux têtes pour le premier groupe de rivets, et dans un deuxième temps, après déplacement dudit rotor par rapport à la bouterolle et/ou de ladite bouterolle par rapport audit rotor, ladite bouterolle assure le bouterollage des extrémités opposées aux têtes des rivets pour le deuxième groupe de rivets.

Selon une mise en oeuvre, deux bouterolles distinctes situées de part et d'autre du rotor assurent simultanément le bouterollage des extrémités des rivets opposées aux têtes pour les deux groupes de rivets.

Selon une mise en oeuvre, chaque groupe de rivets est formé de trois rivets.

L'invention a également pour objet un rotor de machine électrique tournante comportant un corps ayant la forme d'un paquet de tôles, deux flasques plaqués de part et d'autre dudit corps du rotor, et au moins un rivet traversant de part en part ledit corps du rotor et lesdits flasques, caractérisé en ce que ledit rivet est en inox et au moins une des extrémités dudit rivet comporte un épanouissement présentant des traces de bouterollage.

Selon une réalisation, l'extrémité dudit rivet est chanfreinée.

Selon une réalisation, ladite extrémité chanfreinée présente un angle de chanfrein compris entre 40 et 50 degrés par rapport à un axe dudit rivet.

Selon une réalisation, ladite extrémité chanfreinée s'étend sur une distance comprise entre 2 et 5 pourcents de la longueur totale dudit rivet.

Selon une réalisation, ledit rivet comporte une extrémité munie d'une tête.

Selon une réalisation, chaque flasque comporte au moins un poids d'équilibrage.

Selon une réalisation, ladite tête est logée dans une creusure ménagée dans ledit poids d'équilibrage.

Selon une réalisation, ledit rotor comporte un premier groupe de rivets ayant des têtes logées dans des creusures d'un des poids d'équilibrage et un deuxième groupe de rivets ayant des têtes logées dans des creusures de l'autre poids d'équilibrage.

Selon une réalisation, les poids d'équilibrage prennent la forme de demi-anneaux.

Selon une réalisation, les poids d'équilibrage sont sensiblement diamétralement opposés l'un par rapport à l'autre.

L'invention concerne en outre un compresseur comportant une machine électrique munie d'un rotor selon l'invention solidaire d'un arbre apte à assurer une mise en mouvement dudit compresseur.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.
La figure 1 montre une vue de dessus du rotor selon la présente invention sans l'un de ses flasques ;
La figure 2 représente une vue en perspective du ressort utilisé dans le rotor selon la présente l'invention;
La figure 3a est une vue en perspective du rotor assemblé selon la présente invention;
La figure 3b est une vue en perspective éclatée du rotor selon la présente invention.
La figure 4 montre une vue de côté d'un rivet utilisé pour l'assemblage du rotor selon la présente invention;
La figure 5 montre une vue de détail de l'opération de bouterollage des extrémités des rivets.

Les éléments identiques, similaires ou analogues conservent la même référence d'une figure à l'autre.

### DESCRIPTION D'EXEMPLES DE REALISATION DE L'INVENTION

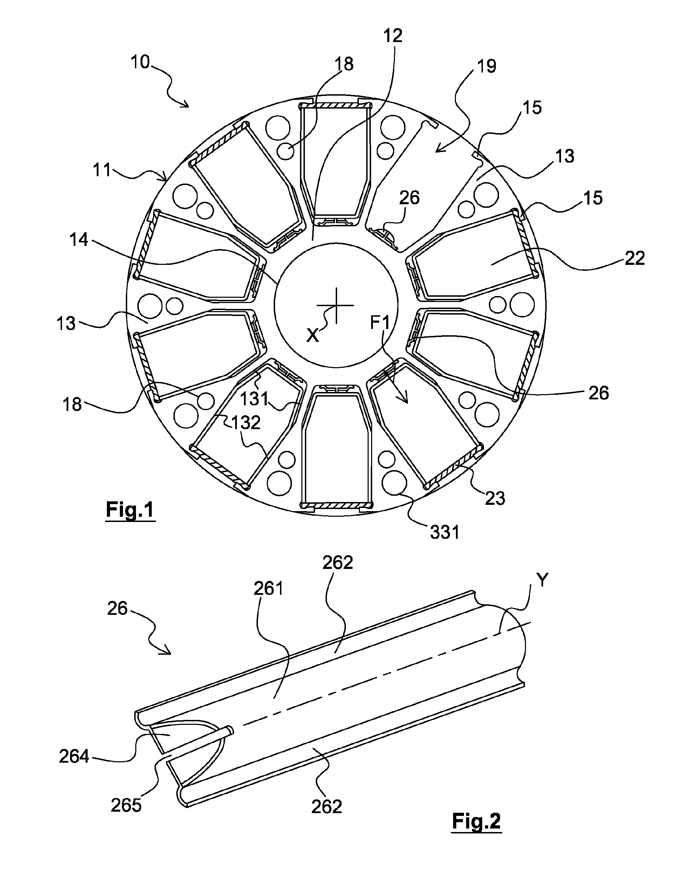

La figure 1 montre un rotor 10 d'axe X destiné à être monté sur un arbre (non représenté). Ce rotor 10 à aimants permanents appartient à une machine électrique tournante, qui pourra être un compresseur utilisé pour la compression de fluide réfrigérant de climatiseur de véhicule automobile. En variante, cela pourra être un moteur électrique ou un alternateur. L'arbre pourra être un arbre menant ou un arbre mené. De manière connue la machine électrique comporte un stator, qui pourra être polyphasé, entourant le rotor. Ce stator est porté par un carter configuré pour porter à rotation l'arbre via des roulements à billes et ou à aiguilles comme visible par exemple dans le document EP1865200 précité.

Le rotor 10 comporte un corps 11 formé par un empilement de tôles s'étendant dans un plan radial perpendiculaire à l'axe X. Le corps 11 du rotor est en matière ferromagnétique. Le corps 11 comporte une âme centrale 12 et des bras 13 s'entendant radialement et axialement à partir de l'âme 12 par rapport à l'axe X. Ces bras 13 comportent chacun à leur extrémité libre deux rebords 15 implantés à la périphérie externe du rotor 10.

L'âme 12 du paquet de tôle peut être liée en rotation à l'arbre de la machine électrique tournante de différentes manières. Par exemple, l'arbre pourra comporter une portion moletée en étant plus dure que les tôles du corps 11 du rotor 10. Dans ce cas, de manière connue, on emmanche à force l'arbre à l'intérieur de l'ouverture centrale 14 du rotor délimité par l'âme 12. La liaison en rotation pourra être en variante réalisée à l'aide d'un dispositif à clavette intervenant entre la périphérie externe de l'arbre et la périphérie interne de l'âme 12. En variante, la liaison en rotation est réalisée via un moyeu central cannelé intérieurement pour sa liaison avec l'arbre.

Les bras 13 sont dans un mode de réalisation d'un seul tenant avec l'âme 12. En variante, tous les bras 13 ou certains d'entre eux seulement sont rapportés sur l'âme 12, par exemple par une liaison du type tenons-mortaises comme décrit dans le document FR2856532. Dans un plan radial, les tôles du rotor 10 ont toutes un contour identique. Le contour des tôles est découpé de forme globalement circulaire et comporte les bras 13 qui sont répartis régulièrement selon une direction radiale vers la périphérie externe. Les tôles sont maintenues au moyen de rivets 18 positionnés sur une même circonférence du corps du rotor 11 et traversant axialement de part en part l'empilement des tôles via des ouvertures (non référencés) pour formation d'un ensemble manipulable et transportable. Les rivets 18 sont avantageusement en matière amagnétique. Alternativement, les feuilles de tôles sont boutonnées via des saillies creuses coopérant entre elles.

Le rotor 10 comporte des logements 19 destinés à recevoir les aimants permanents 22. Les aimants 22 pourront être en terre rare ou en ferrite selon les applications et la puissance recherchée de la machine électrique tournante. Plus précisément, les logements 19 sont délimités chacun par deux faces latérales en regard l'une de l'autre de deux bras 13 adjacents, une face externe de l'âme 12 s'étendant entre les deux bras 13, et des faces des rebords 15 tournées vers l'âme 12 appartenant aux deux bras 13 adjacents.

Les logements 19 présentent une forme complémentaire à celle des aimants 22 qui ont une forme parallélépipédique ayant deux angles biseautés à leur périphérie interne. Les aimants 22 présentent ainsi une section réduite à une de leurs extrémités. Les faces latérales des bras 13 sont formées chacune par un premier plan 131 qui s'étend globalement radialement par rapport à l'axe X destiné à être en regard d'un angle biseauté de l'aimant 22. Les faces latérales des bras 13 comportent un deuxième plan 132 incliné par rapport au premier plan 131 de sorte que deux deuxièmes plans en regard l'un de l'autre d'un même logement 19 sont parallèles l'un par rapport à l'autre et en regard de deux faces longitudinales de l'aimant 22. En l'occurrence, le rotor 10 comporte dix aimants 22 insérés dans dix logements 19 de forme complémentaires. Il ressort de ce qui précède et de la figure 1, d'une part, que chaque bras 13 comporte une première portion, globalement de largeur constante, issue de l'âme 12 prolongée par une deuxième portion s'évasant en direction opposée à l'axe X et terminée par les rebords 15 et d'autre part, que les aimants 22 occupent au maximum l'espace disponible dans le rotor 10. La machine pourra donc avoir la puissance maximum tout en étant compacte radialement. On obtient une solution à concentration de flux, les faces latérales en vis-à-vis de deux aimants 22 consécutifs étant de même polarité.

Le rotor 10 comprend, pour chaque aimant 22, une lame 23 ou plaquette réalisée en un matériau moins dur et plus souple que les aimants 22. La lame 23 est plate rectangulaire et a les mêmes dimensions et la même forme que la face externe de l'aimant 22 qu'elle recouvre avec ses bords en coïncidence. Les lames 23 sont par exemple réalisées en matériau plastique ou composite. Chaque lame 23 est positionnée entre les faces internes de deux rebords 15 tournés l'un vers l'autre et la face externe des aimants 22 tournées vers l'extérieur du rotor 10. La lame 23 a pour fonction de répartir les efforts appliqués par les ressorts 26 et d'éviter, lors de l'insertion du rotor 10, que d'éventuelles poussières ne s'introduisent dans le fluide situé dans l'environnement de la machine électrique. S'il y a lieu, mais ce n'est pas obligatoire, une couche de colle plus souple que l'aimant 22 est interposée entre l'aimant 22 et la lame 23. Pour plus de détails sur la lame 23, on se référera au document FR2784248.

Pour assurer un maintien des aimants 22 à l'intérieur de leur logement 19 contre les rebords 15 via les lames, les ressorts 26 exercent par déformation un effort radial sur l'aimant 22 de l'intérieur vers l'extérieur du rotor 10. A cet effet, les ressorts 26 sont positionnés entre la face interne de l'aimant 22 tournée du côté de l'axe X et le fond du logement 19 constitué par la face de l'âme 12 s'étendant entre deux bras 13 successifs. Comme bien visible sur la figure 2, chaque ressort 26 d'axe Y comporte une portion arrondie centrale 261, et deux portions arrondies d'extrémité 262 situées de part et d'autre de la portion centrale 261. La portion arrondie centrale 261 et les portions d'extrémité 262 présentent des courbures inversées. Le rayon de courbure de la portion centrale 261 est supérieur au rayon de courbure des portions d'extrémité 262. Chaque ressort 26 présente de préférence une extrémité biseautée 264 pour faciliter l'insertion du ressort 26 entre un aimant 22 et une face intérieure d'un logement 19. Chaque ressort 26 comporte en outre une fente 265 pour réduire la rigidité de l'extrémité biseautée 264 et conserver ainsi l'effet du ressort 26.

Lors du montage, les aimants 22 permanents avec les lames 23 ayant été préalablement introduits à l'intérieur des logements 19, les ressorts 26 sont insérés entre deux bras 13 adjacents par leur extrémité biseautée 264 entre la face des aimants 22 et l'âme 12 du rotor 10. La hauteur de l'espace entre l'aimant 22 et l'âme 12 étant inférieure à la hauteur du ressort 26, cette insertion du ressort 26 entre l'âme 12 et l'aimant 22 a tendance à comprimer le ressort 26 suivant sa hauteur, ce qui a pour effet d'écarter les extrémités du ressort 26 l'une de l'autre. Par réaction, le ressort 26 ainsi déformé a alors tendance à exercer un effort radial F1 (cf. figure 1) de l'intérieur vers l'extérieur du rotor 10 sur l'aimant 22 de manière à le maintenir en appui contre les rebords 15.

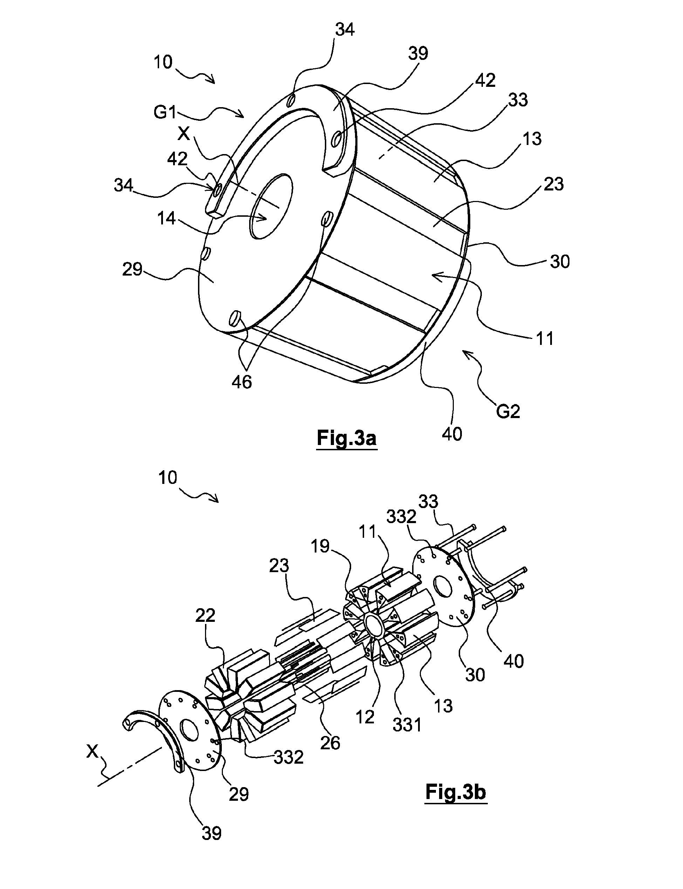

Comme cela est visible sur les figures 3a et 3b, le rotor 10 comporte également deux flasques 29, 30 plaqués de part et d'autre sur ses faces d'extrémité axiales ayant une orientation radiale. Ces flasques 29, 30 sont fixés au rotor 10 au moyen de rivets d'assemblage 33 insérés dans des ouvertures axiales 331 traversantes du corps 11 et dans des ouvertures traversantes correspondantes 332 ménagées dans les flasques 29, 30. Les flasques 29, 30 comporte chacun une partie principale constituée par une plaque en forme de disque réalisée dans un matériau amagnétique comme par exemple en inox. Les flasques 29, 30 pourront assurer un montage globalement étanche du rotor 10 en association avec les lames 23.

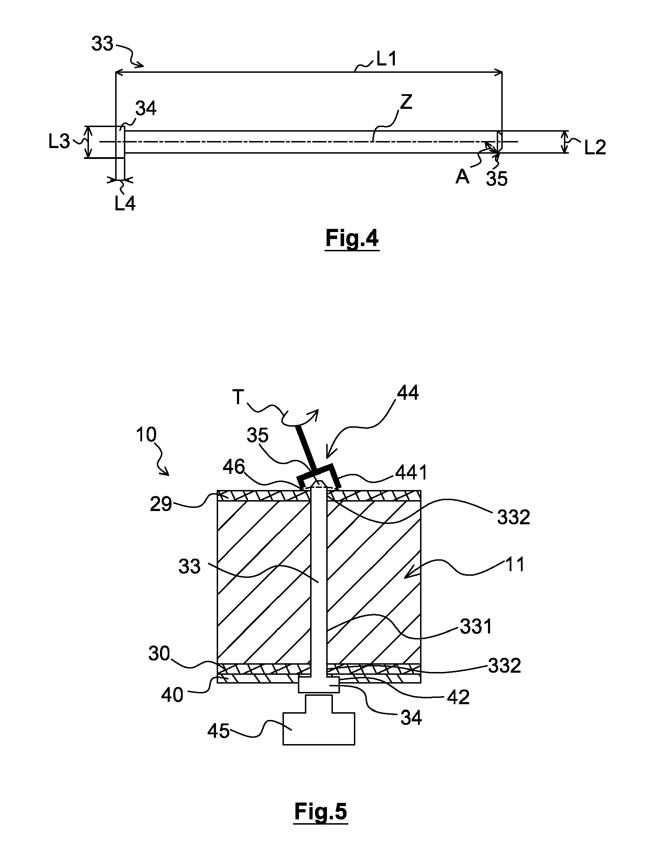

Plus précisément, les rivets 33 sont avantageusement réalisés en inox. Comme cela est visible sur la figure 4, chaque rivet 33 a la forme d'une tige allongée d'axe Z comportant une tête 34 à une de ses extrémités qui s'étend sensiblement radialement par rapport à l'axe Z.

Du côté opposé, chaque rivet 33 présente une extrémité chanfreinée 35. Le chanfrein de cette extrémité 35 présente un angle A compris entre 40 et 50 degrés par rapport à l'axe Z du rivet 33, cet angle A valant de préférence 45 degrés. L'extrémité chanfreinée 35 s'étend sur une distance comprise entre 2 et 5 pourcents de la longueur totale du rivet 33.

Chaque rivet 33 a une longueur plus importante que la longueur axiale du corps 11 du rotor 10. Ainsi, dans un exemple de réalisation non limitatif, le rotor 10 présente une longueur de l'ordre de 38mm avec un intervalle de tolérance égal à 0.7mm, tandis que le rivet 33 présente une longueur L1 de 43.5mm avec un intervalle de tolérance de 0.3mm. La tige du rivet 33 présente un diamètre L1 de 2.5mm. Par ailleurs, la tête 34 présente un diamètre L3 de 3.5mm et une épaisseur L4 de 1 mm. De préférence, afin de limiter les risques de flambage, les rivets 33 sont réalisés dans un matériau plein. Les rivets 33 d'assemblage sont implantés sur une même circonférence de diamètre supérieur à celui des rivets 18 du paquet de tôles.

Chaque flasque 29, 30 comporte en outre un poids d'équilibrage 39, 40 en forme de demi-anneau afin de compenser un déséquilibre sur l'arbre du rotor 10 généré par le mouvement d'une spire du compresseur. Les deux poids d'équilibrage 39, 40 sont sensiblement diamétralement opposés l'un par rapport à l'autre. Les poids 39, 40 présentent chacun des creusures 42 de réception des têtes 34 des rivets 33, comme visible aux figures 3a et 3b. Les poids d'équilibrage 39, 40 pourront être en laiton. Il en est de même en variante des flasques 29, 30.

Afin de réaliser l'assemblage du rotor 10, on positionne un flasque 29, 30 associé à son poids d'équilibrage 39, 40 contre chaque face d'extrémité du rotor 10. Un premier groupe G1 de rivets 33, en l'occurrence trois rivets 33, est inséré par un côté du rotor 10 à l'intérieur des ouvertures traversantes ménagées dans un des poids d'équilibrage 39 et à l'intérieur des ouvertures 331, 332 en correspondance des deux flasques 29, 30 et du corps 11 du rotor 10. Les rivets 33 sont insérés dans les ouvertures via leur extrémité libre chanfreinée 35, en sorte que les têtes 34 viennent se loger dans les creusures 42 réalisées dans le poids d'équilibrage 39.

Les extrémités chanfreinées 35 dépassantes du premier groupe G1 de rivets sont bouterollées au moyen d'une bouterolle 44. A cet effet, comme on peut le voir sur la figure 5, l'extrémité dépassante chanfreinée 35 de chaque rivet 33 est positionnée à l'intérieur d'un creux de la bouterolle 44. Le positionnement du rivet 33 par rapport à la bouterolle 44 est assuré au moyen d'un système d'indexage 45.

Lors d'une mise en mouvement de la bouterolle 44 suivant une trajectoire gyroscopique T, les faces internes d'appui 441 de la bouterolle 44 appliquent une combinaison d'efforts axiaux et radiaux sur l'extrémité chanfreinée 35. L'extrémité 35 est ainsi écrasée de manière à former un épanouissement radial 44. On pourra se référer au document WO02070170 pour plus de détails sur le procédé de bouterollage.

On déplace ensuite le rotor 10 par rapport à la bouterolle 44 et/ou la bouterolle 44 par rapport au rotor 10 sur un demi-tour et on réalise par symétrie le bouterollage d'un deuxième groupe G2 de rivets 33. Plus précisément, les rivets 33 du deuxième groupe G2, en l'occurrence au nombre de trois, sont insérés par l'autre côté du rotor 10 à l'intérieur des ouvertures traversantes ménagées dans l'autre poids d'équilibrage 40 et à l'intérieur des ouvertures en correspondance des deux flasques 29, 30 et du corps 11 du rotor 10. Les rivets 33 sont insérés dans les ouvertures via leur extrémité libre chanfreinée 35, en sorte que les têtes 34 viennent se loger dans les creusures 42 ménagées dans le poids d'équilibrage 40. Les extrémités chanfreinées 35 dépassantes du deuxième groupe G2 de rivets sont ensuite bouterollées au moyen de la bouterolle 44.

Une fois l'opération de bouterollage des rivets 33 terminée, l'ensemble formé par le corps 11 du rotor, les flasques 29, 30 et les poids d'équilibrage 39, 40 est maintenu coincé entre les têtes 34 des rivets 33 en appui contre un des poids d'équilibrage 39, 40 et les épanouissements 46 formés par bouterollage en appui contre la face opposée du flasque correspondant. Ainsi, sur le produit fini, une extrémité de chaque rivet 33 d'assemblage des flasques 29, 30 présente des traces de bouterollage. Pour chaque groupe de rivets G1, G2 associé à un poids d'équilibrage 39, 40, les extrémités présentant des traces de bouterollage sont situées du côté opposé au poids d'équilibrage correspondant.

Pour accélérer l'opération de bouterollage, on utilise de préférence une bouterolle 44 à triple têtes.

L'invention permet ainsi d'assurer une déformation de la matière de l'extrémité du rivet sans générer de particules de matière polluantes susceptibles de s'introduire à l'intérieur du fluide du compresseur. En outre, la longueur du rivet écrasée lors de la mise en oeuvre du procédé pouvant être importante, il est possible d'augmenter les intervalles de tolérance de l'assemblage. L'invention facilite ainsi également la réalisation du rotor. La longueur dépassante sera toutefois maintenue dans un intervalle de sécurité afin d'éviter que l'épanouissement du rivet issu de l'écrasement de matière s'étende dans l'entrefer de la machine.

Alternativement, dans le cas de l'utilisation de deux bouterolles 44 positionnées de chaque côté du rotor 10, il est possible d'insérer les deux groupes G1, G2 de rivets 33 en sorte que des extrémités chanfreinées 35 dépassent de chaque côté du rotor 10. Les bouterolles 44 assurent ensuite simultanément le bouterollage des extrémités dépassantes des rivets 33 pour les deux groupes G1, G2 de rivets.

Bien entendu, la présente invention n'est pas limitée aux exemples de réalisations décrits. Ainsi, chaque groupe G1, G2 de rivets pourra comporter un nombre de rivets 33 supérieur ou inférieur à trois en fonction de l'application.

En variante, afin de réaliser l'équilibrage du rotor 10, les flasques 29, 30 pourront comporter des saillies dotées de trous borgnes pour montage de masses d'équilibrage aux endroits adéquates comme décrit dans le document DE202346345 auquel on se reportera pour plus de précisions.

L'arbre du rotor 10 pourra entraîner directement les palettes du compresseur. Le rotor 10 et le stator pourront être refroidis par le liquide réfrigérant.

La machine électrique tournante, dotée d'un rotor 10 selon l'invention, pourra comporter un stator polyphasé, par exemple du type triphasé, dont les sorties des phases sont reliées, de manière connue, à un onduleur de pilotage de la machine comme décrit par exemple dans la demande EP0831580 auquel on se reportera pour plus de précisions.

Par ailleurs, le nombre d'aimants 22 et de logements 19 pourra être inférieur ou supérieur à dix selon les applications. Le nombre d'aimants 22 pourra être en variante inférieur au nombre de logements 19 en fonction de la puissance désirée de la machine électrique tournante. Par exemple deux logements 19 diamétralement opposés peuvent être vides. En variante, les aimants 22 peuvent être de nuance différente pour réduire les coûts. Par exemple, au moins deux logements 19 diamétralement opposés peuvent être équipés d'aimants 22 en ferrite et les autres d'aimants 22 en terre rare plus puissant mais plus coûteux.

En variante, au lieu d'être formés par des aimants 22, les pôles du rotor 10 sont formés par des bobines.

## Revendications

1. Procédé d'assemblage d'un rotor (10) de machine électrique tournante, caractérisé ce qu'il comporte les étapes suivantes:
- plaquer un flasque (29, 30) contre chaque face d'extrémité d'un corps (11) dudit rotor prenant la forme d'un paquet de tôles,
- insérer au moins un rivet (33) en inox à l'intérieur d'une ouverture traversante ménagée dans ledit corps (11) du rotor (10) et dans lesdits flasques (29, 30), en sorte qu'au moins une extrémité dudit rivet (33) dépasse par rapport à un des flasques (29, 30), et
- écraser par bouterollage ladite extrémité dépassante (35) dudit rivet (33) pour formation d'un épanouissement (46).

2. Procédé selon la revendication 1, **caractérisé en ce que** l'extrémité dépassante (35) du rivet (33) est chanfreinée.

3. Procédé selon la revendication 2, **caractérisé en ce que** ladite extrémité chanfreinée (35) présente un angle (A) de chanfrein compris entre 40 et 50 degrés par rapport à un axe (Z) dudit rivet (33).

4. Procédé selon la revendication 2 ou 3, **caractérisé en ce que** ladite extrémité chanfreinée (35) s'étend sur une distance comprise entre 2 et 5 pourcents d'une longueur totale dudit rivet (33).

5. Procédé selon l'une quelconque des revendications 1 à 4, **caractérisé en ce que** chaque flasque (29, 30) comporte au moins un poids d'équilibrage (39, 40).

6. Procédé selon la revendication 5, **caractérisé en ce que** ledit rivet (33) est inséré en sorte qu'une tête (34) dudit rivet (33) est logée à l'intérieur d'une creusure (42) ménagée dans un des poids d'équilibrage (39, 40).

7. Procédé selon la revendication 6, **caractérisé en ce qu'**il comporte l'étape d'assembler les flasques (29, 30) et leur poids d'équilibrage (39, 40) correspondant avec ledit corps (11) du rotor (10) au moyen de deux groupes (G1, G2) de rivets (33), un premier groupe (G1) de rivets (33) ayant des têtes (34) logées dans des creusures (42) d'un des poids d'équilibrage (39) tandis qu'un deuxième groupe (G2) de rivets (33) a des têtes (34) logées dans des creusures (42) de l'autre poids d'équilibrage (40).

8. Procédé selon la revendication 7, **caractérisé en ce qu'**une bouterolle (44) assure, dans un premier temps, le bouterollage des extrémités dépassantes des rivets (33) opposées aux têtes (34) pour le premier groupe (G1) de rivets (33), et dans un deuxième temps, après déplacement dudit rotor (10) par rapport à la bouterolle (44) et/ou de ladite bouterolle (44) par rapport audit rotor (10), ladite bouterolle (44) assure le bouterollage des extrémités opposées aux têtes (34) des rivets (33) pour le deuxième groupe (G2) de rivets (33).

9. Procédé selon la revendication 7, **caractérisé en ce que** deux bouterolles (44) distinctes situées de part et d'autre du rotor (10) assurent simultanément le bouterollage des extrémités des rivets (33) opposées aux têtes (34) pour les deux groupes (G1, G2) de rivets (33).

10. Procédé selon l'une quelconque des revendications 7 à 9, **caractérisé en ce que** chaque groupe (G1, G2) de rivets (33) est formé de trois rivets.

11. Rotor (10) de machine électrique tournante comportant un corps (11) ayant la forme d'un paquet de tôles, deux flasques (29, 30) plaqués de part et d'autre dudit corps (11) du rotor (10), et au moins un rivet (33) traversant de part en part ledit corps (11) du rotor (10) et lesdits flasques (29, 30), **caractérisé en ce que** ledit rivet (33) est en inox et au moins une des extrémités dudit rivet (33) comporte un épanouissement (46) présentant des traces de bouterollage.

12. Rotor selon la revendication 11, **caractérisé en ce que** l'extrémité (35) dudit rivet (33) est chanfreinée.

13. Rotor selon la revendication 12, **caractérisé en ce que** ladite extrémité chanfreinée (35) présente un angle (A) de chanfrein compris entre 40 et 50 degrés par rapport à un axe (Z) dudit rivet (33).

14. Rotor selon la revendication 12 ou 13, **caractérisé en ce que** ladite extrémité chanfreinée (35) s'étend sur une distance comprise entre 2 et 5 pourcents de la longueur totale dudit rivet (33).

15. Rotor selon l'une quelconque des revendications 11 à 14, **caractérisé en ce que** ledit rivet (33) comporte une extrémité munie d'une tête (34).

16. Rotor selon l'une quelconque des revendications 11 à 15, **caractérisé en ce que** chaque flasque (29, 30) comporte au moins un poids d'équilibrage (39, 40).

17. Rotor selon les revendications 15 et 16, **caractérisé en ce que** ladite tête (34) est logée dans une creusure (42) ménagée dans ledit poids d'équilibrage.

18. Rotor selon la revendication 17, **caractérisé en ce qu'**il comporte un premier groupe (G1) de rivets (33) ayant des têtes (34) logées dans des creusures (42) d'un des poids d'équilibrage (39) et un deuxième groupe (G2) de rivets (33) ayant des têtes (34) logées dans des creusures (42) de l'autre poids d'équilibrage (40).

19. Rotor selon l'une quelconque des revendications 16 à 18, **caractérisé en ce que** les poids d'équilibrage (39, 40) prennent la forme de demi-anneaux.

20. Rotor selon la revendication 19, **caractérisé en ce que** les poids d'équilibrage (39, 40) sont sensiblement diamétralement opposés l'un par rapport à l'autre.

21. Compresseur comportant une machine électrique munie d'un rotor (10) selon l'une quelconque des revendications 11 à 20 solidaire d'un arbre apte à assurer une mise en mouvement dudit compresseur.
